# EUROPEAN PATENT APPLICATION

(11) **EP 4 668 465 A1**
(43) Date of publication of application: **24.12.2025**
(21) Application number: 24755847.1
(22) Date of filing: 09.01.2024
(51) Int. Cl.: H01M 50/533

(54) **CURRENT COLLECTING ASSEMBLY, ENERGY STORAGE APPARATUS, AND ELECTRIC DEVICE**

(30) Priority: 17.02.2023 CN 202310132624
(71) Applicant: Xiamen Hithium Energy Storage Technology Co., Ltd., Xiamen, Fujian 361100 (CN)
(72) Inventor: XIONG, Yongfeng, Xiamen, Fujian 361100 (CN)
(74) Representative: RGTH
(86) International application number: PCT/CN2024/071384
(87) International publication number: WO 2024/169472

(57) **Abstract**

A current collecting assembly, an energy storage apparatus, and an electric device. The current collecting assembly comprises a first connecting member and a second connecting member; the first connecting member comprises a first connecting portion, a second connecting portion, and a conducting portion; the conducting portion is provided with at least one first reinforcing rib and at least one second reinforcing rib, the first reinforcing rib protrudes out of a first surface of the conducting portion, and the second reinforcing rib protrudes out of a second surface of the conducting portion; the second connecting portion is mechanically connected to the surface of the second connecting member, and after the second connecting portion rotates, the second connecting member is located on the side of the second connecting portion facing away from the conducting portion.

## Description

### CROSS REFERENCES

The present disclosure claims priority to Chinese patent application No. 202310132624.8 filed on February 17, 2023, entitled "Current collecting assembly, energy storage apparatus, and electric device", the entire content of which is incorporated herein by reference.

### TECHNICAL FIELD

The present disclosure relates to the field of energy storage technology, and in particular to a current collecting component, an energy storage apparatus and an electrical device.

### BACKGROUND

A battery cell includes a housing, an electrode assembly located in the housing, and an end cap assembly arranged at and covering an opening of the housing. The electrode assembly is connected to an electrode terminal on the end cap assembly through a current collecting assembly to conduct electrical energy of the electrode assembly through the electrode terminal.

### SUMMARY

According to a first aspect of the present disclosure, there is provided a current collecting assembly, including a first connection member and a second connection member, the first connection member includes a first connection portion, a second connection portion, and a conducting portion connected between the first connection portion and the second connection portion, that are distributed along a first direction; where the conducting portion is provided with at least one first reinforcing rib extending along a direction away from the first connection portion from an end closer to the first connection portion and at least one second reinforcing rib extending along a direction away from the second connection portion from an end closer to the second connection portion, the first reinforcing rib protrudes from a first surface of the conducting portion, and the first connection portion can rotate to a first side where the first surface of the conducting portion is located, the second reinforcing rib protrudes from a second surface of the conducting portion, and the second connection portion can rotate to a second side where the second surface of the conducting portion is located; the first reinforcing rib and the second reinforcing rib are arranged in a staggered manner in a second direction, and the first reinforcing rib and the second reinforcing rib partially overlap in the second direction, the second direction being perpendicular to the first direction; the second connection portion is mechanically connected to a surface of the second connection member, and after the second connection portion rotate to the second side of the conducting portion, the second connection member is located on a side of the second connection portion facing away from the conducting portion.

According to a second aspect of the present disclosure, there is provided an energy storage apparatus, including a housing, an electrode assembly, an end cover assembly and a current collecting assembly in the first aspect; the housing includes an accommodation cavity having an opening; the electrode assembly is accommodated in the accommodation cavity; the end cover assembly seals the opening of the housing; and the current collecting assembly is located between the electrode assembly and the end cover assembly and connects the electrode assembly and the end cover assembly.

According to a third aspect of the present disclosure, an electrical device is provided, the electrical device includes the energy storage apparatus according to the second aspect, and the energy storage apparatus supplies power to the electrical device.

### BRIEF DESCRIPTION OF THE DRAWINGS

The above and other features and advantages of the present disclosure will become more apparent from the illustrative embodiments thereof described in detail with reference to the accompanying drawings.
FIG. 1 is a schematic cross-sectional structure diagram of a battery cell according to an illustrative embodiment.
FIG. 2 is a top view schematic diagram of a current collecting assembly before bending according to an illustrative embodiment.
FIG. 3 is a bottom view schematic diagram of a current collecting assembly before bending according to an illustrative embodiment.
FIG. 4 is a schematic diagram of an axial-side structure of a current collecting assembly after bending according to an illustrative embodiment.
FIG. 5 is a schematic structural diagram of a current collecting assembly after being connected to an end cover assembly according to an illustrative embodiment.

The reference numerals are explained as follows:
100. Battery cell;
10. Housing; 20. Electrode assembly; 30. End cap assembly; 40. Current collecting assembly;
11. Accommodation cavity;
31. Electrode terminal; 32. Cover body;
41. First connection member; 42. Second connection member;
411. First connection portion; 412. Second connection portion; 413. Conducting portion; 414. First bending portion; 415. Second bending portion;
L1. First edge line; L2. Second edge line;
4131. First reinforcing rib; 4132. Second reinforcing rib; 4133. First surface; 4134. Second surface.

### DETAILED DESCRIPTION

Illustrative embodiments will now be described more fully with reference to the accompanying drawings. However, the illustrative embodiments can be implemented in a variety of forms and should not be construed as being limited to the embodiments set forth herein; rather, these embodiments are provided so that the present disclosure will be comprehensive and complete and will fully convey the concepts of the illustrative embodiments to those skilled in the art. The same reference numerals in the figures represent the same or similar structures, and thus the detailed description thereof will be omitted.

An embodiment of the present disclosure provides an energy storage apparatus, which may be, but is not limited to, a battery cell, a battery module, a battery pack, a battery system, etc.

The battery cell can be a lithium-ion secondary battery, a lithium-sulfur battery, a sodium-lithium-ion battery, a sodium-ion battery, a magnesium-ion battery, etc. The battery cell can be in a shape of a cylinder, a flat body, a cuboid, etc., which is not limited in the embodiments of the present disclosure.

Next, the energy storage apparatus is explained in detail by way of example where the energy storage apparatus is a battery cell.

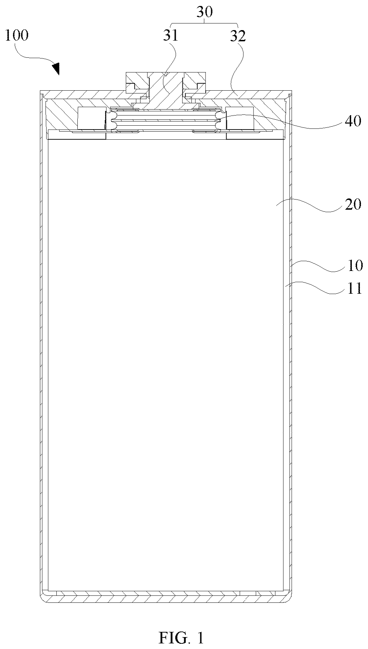

As shown in FIG. 1, the battery cell 100 includes a housing 10, an electrode assembly 20, an end cover assembly 30 and a current collecting assembly 40. The housing 10 includes an accommodation cavity 11 with an opening, the electrode assembly 20 is accommodated in the accommodation cavity 11, the end cover assembly 30 seals the opening of the housing 10, and the current collecting assembly 40 is located between the electrode assembly 20 and the end cover assembly 30, and connects the electrode assembly 20 and the end cover assembly 30.

The end cap assembly 30 includes an electrode terminal 31 and a cover body 32. The cover body 32 seals the opening of the housing 10. The electrode terminal 31 is assembled on the cover body 32 and is connected to a tap of the electrode assembly 20 through the current collecting assembly 40, so as to facilitate conduction of electrical energy from the electrode assembly 20 through the electrode terminal 31.

For the current collecting assembly 40 connecting the tab of the electrode assembly 20 and the electrode terminal 31, the current collecting assembly 40 is a bendable plate-like structure to facilitate assembly of the battery cell 100. Specifically, two ends of the current collecting assembly 40 are respectively connected to the tab of the electrode terminal 31 and the electrode assembly 20, and then the current collecting assembly 40 is bent so that the cover 32 can seal the opening of the housing 10.

In the related art, in the production process of battery cells, when the electrode assembly and the electrode terminal are connected through the current collecting assembly, there is still a high safety hazard of the battery cells.

In detail, when the current collecting assembly 40 is bent, it is difficult to determine the bending position, resulting in the current collecting assembly 40 being skewed after being bent (that is, a line where the bending crease is located is not perpendicular to a length direction of the current collecting assembly 40), reducing the bending yield of the current collecting assembly 40, which is likely to cause interference between the current collecting assembly 40 and the end cover assembly 30 during the assembly process of the single cell 100, causing safety problems for the battery cell 100.

In an embodiment of the present disclosure, a current collecting assembly 40 is provided, based on which the bending yield is improved, and at the same time, the connection yield of the current collecting assembly 40 with the electrode terminal 31 and the electrode assembly 20 can be improved, thereby improving the assembly yield of the battery cell 100 and reducing the safety hazards of the battery cell 100.

Next, a structure of the current collecting assembly 40 is explained in detail.

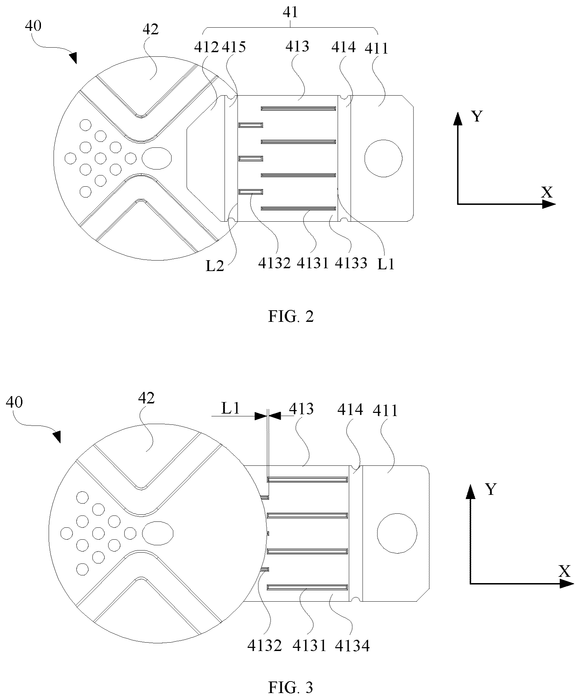

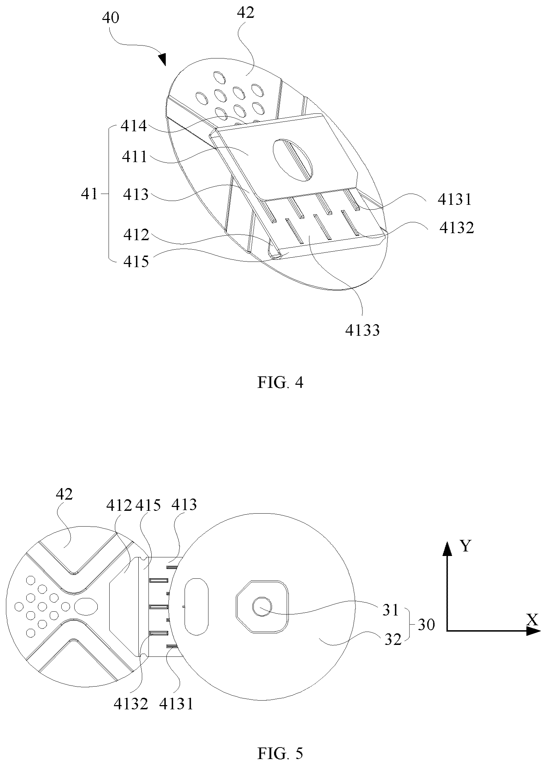

FIG. 2 and FIG. 3 are respectively a top view and a bottom view illustrating a current collecting assembly 40 provided in an embodiment of the present disclosure before bending, and FIG. 4 is a schematic structural diagram illustrating a current collecting assembly 40 provided in an embodiment of the present disclosure after bending. As shown in FIGS. 2, 3 and 4, the current collecting assembly 40 includes a first connection member 41 and a second connection member 42.

The first connection member 41 includes a first connection portion 411, a second connection portion 412 and a conducting portion 413 connecting the first connection portion 411 and the second connection portion 412, that are arranged along a first direction X.

The conducting portion 413 has at least one first reinforcing rib 4131 extending along a direction away from the first connection portion 411 from an end closer to the first connection portion 411, and at least one second reinforcing rib 4132 extending along a direction away from the second connection portion 412 from an end closer to the second connection portion 412, the first reinforcing rib 4131 protrudes from a first surface 4133 of the conducting portion 413, and the first connection portion 411 can rotate to a first side where the first surface 4133 of the conducting portion 413 is located, the second reinforcing rib 4132 protrudes from a second surface 4134 of the conducting portion 413, and the second connection portion 412 can rotate to a second side where the second surface 4134 of the conducting portion 413 is located.

The second connection portion 412 is mechanically connected (e.g., laser welded) to a surface of the second connection member 42, and after the second connection portion 412 is bent to the second side of the conducting portion 413, the second connection member 42 is located on a side of the second connection portion 412 facing away from the conducting portion 413.

In the embodiments of the present disclosure, based on the first reinforcing rib 4131 and the second reinforcing rib 4132 on the conducting portion 413, the structural strength of the conducting portion 413 can be improved, and at the same time, it realizes positioning of the first connection portion 411 and the second connection portion 412 when they rotate with respect to the conducting portion 413, improving the bending yield of the current collecting assembly 40, and after the first connection portion 411 and the second connection portion 412 are bent, the first reinforcing rib 4131 and the second reinforcing rib 4132 can support the first connection portion 411 and the second connection portion 412, thereby avoiding a relative small angle between the first and second connection portions 411 and 412 and the conducting portion 413 and lack of a buffer space therebetween, and further avoiding brittle fracture of the battery cell due to vibration during mechanical transportation. In addition, for the separately arranged second connection member 42, with the design of a fully circular outer contour of the second connection member 42, formation of a notch on the edge of the second connection member 42 after the current collecting assembly 40 is bent can be avoided. As such, when the second connection member 42 is connected to the tap of the electrode assembly 20, exposing of the tap outside the edge of the second connection member 42 can be effectively avoided, thereby improving the fit between the current collecting assembly 40 and the tap of the electrode assembly 20, avoiding the lodging or flattened tap from warping and contacting the housing 10 to cause a short circuit, and thus improving the yield rate of the connection between the current collecting assembly 40 and the electrode assembly 20.

Before the current collecting assembly 40 is bent, the first connection portion 411 is in a fixed state after being connected to the electrode terminal 31, and the second connection portion 412 is in a fixed state after being connected to the second connection member 42. In this case, with the arrangement of the first reinforcing rib 4131 and the second reinforcing rib 4132 on the conducting portion 413, the current collecting assembly 40 can only be bent at a position on a side of the first reinforcing rib 4131 that is closer to the first connection portion 411, and at a position on a side of the second reinforcing rib 4132 that is closer to the second connection portion 412, thereby realizing the positioning of the first connection portion 411 and the second connection portion 412 when rotating relative to the conducting portion 413.

Since the conducting portion 413 is connected to the second connection member 42 through the second connection portion 412, when the second connection portion 412 rotates relative to the conducting portion 413, it will not affect the shape of the second connection member 42, and after the second connection portion 412 rotates to the second side of the conducting portion 413, as shown in FIG. 4, in a thickness direction of the conducting portion 413, the conducting portion 413 is located in an area where the second connection member 42 is located, thereby avoiding the limitation on the outer contour of the second connection member 42 by the conducting portion 413. Therefore, the outer contour of the second connection member 42 can be set according to the cross-sectional contour of the accommodation cavity of the housing 10. For example, the housing 10 has a cylindrical accommodation cavity, and in this case, as shown in FIG. 2 or FIG. 3, the second connection member 42 is a circular plate-like structure.

As shown in FIG. 3, in the thickness direction of the conducting portion 413, there is no overlapping area between the first reinforcing rib 4131 and the second connection member 42, so as to avoid interference between the first reinforcing rib 4131 and the second connection member 42 when the second connection member 42 located on the first side of the conducting portion 413 is mechanically connected to the second connection portion 412; as shown in FIG. 5, in the thickness direction of the conducting portion 413, there is no overlapping area between the second reinforcing rib 4132 and the end cover assembly 30, so as to avoid interference between the second reinforcing rib 4132 and the cover body 32 when the electrode terminal 31 located on the second side of the conducting portion 413 is connected to the first connection portion 411, thereby ensuring the connection of the first connection member 41 with the electrode terminal 31 and the second connection member 42, and further ensuring the stability when the current collecting assembly 40 conducts the electrical energy of the electrode assembly 20 to the electrode terminal 31.

In an implementation of the present disclosure, the first connection member 41 is a plate-like structure with a certain length, and a length direction of the first connection member 41 is the first direction X. The first connection portion 411, the second connection portion 412, and the conducting portion 413 included in the first connection member 41 can be an integrally formed structural member to ensure the conduction effect of the current on the first connection member 41.

In some embodiments, as shown in FIG. 2 or FIG. 4, the first connection member 41 further includes a first bending portion 414 and a second bending portion 415; the first bending portion 414 is connected to the first connection member 411 and the conducting portion 413, respectively, and the first bending portion 414 can be bent so that the first connection member 411 rotates to the first side of the conducting portion 413; the second bending portion 415 is connected to the second connection member 412 and the conducting portion 413, respectively, and the second bending portion 415 can be bent so that the second connection member 412 rotates to the second side of the conducting portion 413. In this way, by providing the first bending portion 414 and the second bending portion 415, it facilitates to realize rotation of the first connection member 411 relative to the conducting portion 413 and rotation of the second connection member 412 relative to the conducting portion 413, respectively.

Before the current collecting assembly 40 is bent, the first bending portion 414 and the second bending portion 415 are both in a flat plate structure as shown in FIG. 2, and after the current collecting assembly 40 is bent, the first bending portion 414 and the second bending portion 415 are both in an arc-shaped plate structure as shown in FIG. 4.

Optionally, both ends of the first bending portion 414 and both ends of the second bending portion 415 along the second direction Y have arc-shaped notches to further improve the positioning effect of the bending position when the first connection portion 411 and the second connection portion 412 are bent, thereby improving the bending yield of the current collecting assembly 40 when being bent.

In an implementation of the present disclosure, the first reinforcing rib 4131 and the second reinforcing rib 4132 each can be a structure independent of the conducting portion 413. In this case, the first reinforcing rib 4131 and the second reinforcing rib 4132 can be fixed to the conducting portion 413 by laser welding, or can be bonded to the conducting portion 413 by conductive adhesive. Of course, the first reinforcing rib 4131, the second reinforcing rib 4132 and the conducting portion 413 can also be an integrated structure, that is, the first reinforcing rib 4131 and the second reinforcing rib 4132 can be formed on the conducting portion 413 by stamping, so that the connection strength between the first reinforcing rib 4131, the second reinforcing rib 4132 and the conducting portion 413 can be ensured.

After the current collecting assembly 40 is bent, since the first reinforcing rib 4131 is used to support the first connection portion 411, and the second reinforcing rib 4132 is used to support the second connection portion 412, in order to effectively ensure the angle between the first connection portion 411 and the conducting portion 413, and the angle between the second connection portion 412 and the conducting portion 413, the first reinforcing rib 4131 and the second reinforcing rib 4132 can be set slightly higher, that is, a height of the first reinforcing rib 4131 protruding from the first surface 4133 of the conducting portion 413 and a height of the second reinforcing rib 4132 protruding from the second surface 4134 of the conducting portion 413 are slightly higher. For example, in the thickness direction of the conducting portion 413, the height of the first reinforcing rib 4131 protruding from the first surface 4133 and the height of the second reinforcing rib 4132 protruding from the second surface 4134 are both greater than or equal to the thickness of the conducting portion 413. In addition, by defining the protruding heights of the first reinforcing ribs 4131 and the second reinforcing ribs 4132, the current collecting assembly 40 can have a larger buffer space in the thickness direction of the conducting portion 413, so as to reduce the possibility of the current collecting assembly 40 being broken due to extrusion.

The extension direction of the first reinforcing rib 4131 and the extension direction of the second reinforcing rib 4132 can be parallel or intersecting to each other, and the extension direction of the first reinforcing rib 4131 and the second reinforcing rib 4132 can be parallel to the first direction X or form an acute angle with the first direction X, which is not limited in the embodiments of the present disclosure.

When the extension direction of the first reinforcing rib 4131 and the extension direction of the second reinforcing rib 4132 are both parallel to the first direction X, interference between the first reinforcing rib 4131 and the second reinforcing rib 4132 when they are arranged on the conducting portion 413 can be avoided, thereby reducing the design difficulty of the conducting portion 413, while ensuring the uniformity of the structural strength of the conducting portion 413 in the second direction Y, avoiding tearing between the conducting portion 413 and the first and second connection portions 411 and 412. The second direction Y is perpendicular to the first direction X.

In some embodiments, as shown in FIG. 2 or FIG. 3, the first reinforcing rib 4131 and the second reinforcing rib 4132 are staggered in the second direction Y, and the first reinforcing rib 4131 and the second reinforcing rib 4132 partially overlap in the second direction Y. In this way, the structural stability of the conducting portion 413 itself is improved, and the conducting portion 413 itself is prevented from bending when the current collecting assembly 40 is bent, thereby improving the bending yield of the current collecting assembly 40.

Optionally, as shown in FIG. 3, a length of the overlapping part of the first reinforcing rib 4131 and the second reinforcing rib 4132 along the first direction X is greater than or equal to 0.5 mm. In this way, by limiting the minimum length, along the first direction X, of the part in which the first reinforcing rib 4131 and the second reinforcing rib 4132 overlap in the second direction Y, the structural stability of the conducting portion 413 itself, especially the overlapping part, is further improved, and when the current collecting assembly 40 is bent, the conducting portion 413 is prevented from being torn at the overlapping part due to the limitation of the first reinforcing rib 4131 and the second reinforcing rib 4132, thereby improving the bending yield of the current collecting assembly 40. For example, the length of the overlapping part along the first direction X is 0.5 mm, 1 mm, 2 mm, etc.

In an embodiment of the present disclosure, for the first reinforcing rib 4131 and the second reinforcing rib 4132 on the conducting portion 413, the number of the first reinforcing ribs 4131 may be one or more, and the number of the second reinforcing ribs 4132 may be one or more.

In the case where the conducting portion 413 has one first reinforcing rib 4131 and one second reinforcing rib 4132, in order to ensure that the end of the first reinforcing rib 4131 closer to the first connection portion 411 can effectively limit a bending position of the first connection portion 411 when it rotates relative to the conducting portion 413 and to ensure that the end of the second reinforcing rib 4132 closer to the second connection portion 412 can effectively limit the bending position of the second connection portion 412 when it rotates relative to the conducting portion 413, the first reinforcing rib 4131 and the second reinforcing rib 4132 can be set to have a certain width in the second direction Y.

As shown in FIG. 2 or FIG. 3, in the case where the conducting portion 413 has a plurality of first reinforcing ribs 4131 and a plurality of second reinforcing ribs 4132, the plurality of first reinforcing ribs 4131 and the plurality of second reinforcing ribs 4132 are arranged along the second direction Y, and the first reinforcing ribs 4131 and the second reinforcing ribs 4132 are arranged alternately along the second direction Y.

In this way, by providing the plurality of first reinforcing ribs 4131 and the plurality of second reinforcing ribs 4132, and by alternately arranging the first reinforcing ribs 4131 and the second reinforcing ribs 4132, the structural strength of the overall area of the conducting portion 413 can be effectively guaranteed, and local tearing due to weak local structural strength can be avoided. In addition, by providing the plurality of first reinforcing ribs 4131 and the plurality of second reinforcing ribs 4132, a cross-sectional area for current flowing of the conducting portion 413 can be effectively increased so as to increase the conduction effect of the electrical energy by the conducting portion 413, and thus for the energy storage apparatus including the current collecting assembly 40, it can effectively improve the electrical performance of the energy storage apparatus.

The first reinforcing ribs 4131 and the second reinforcing ribs 4132 may be arranged alternately one by one, or two by two, or may be arranged alternately in other ways, which is not limited in the embodiments of the present disclosure. For example, they can be arranged alternately one by two, that is, one first reinforcing rib 4131, two second reinforcing ribs 4132, one first reinforcing rib 4131, two second reinforcing ribs 4132, and one first reinforcing rib 4131 are arranged in the second direction Y.

In some embodiments, in the case where the conducting portion 413 includes a plurality of first reinforcing ribs 4131, as shown in FIG. 2, an end of each of the plurality of first reinforcing ribs 4131 that is closer to the first connection portion 411 is aligned along the second direction Y, and a straight line where the ends of the plurality of first reinforcing ribs 4131 closer to the first connection portion 411 are located is parallel to a first edge line L1 of the conducting portion 413 closer to the first connection portion 411. In this way, with the ends of the plurality of first reinforcing ribs 4131 closer to the first connection portion 411, the bending position of the first connection portion 411 when it rotates relative to the conducting portion 413 can be more effectively limited, further improving the rotating yield of the first connection portion 411.

In addition to the ends of the plurality of first reinforcing ribs 4131 closer to the first connection portion 411 being aligned along the second direction Y, there may also be several first reinforcing ribs 4131 having a shortest distance to the first connection portion 411 among the plurality of first reinforcing ribs 4131 and an end of each of the several first reinforcing ribs 4131 that is closer to the first connection portion 411 is aligned along the second direction Y. In this case, when the first connection portion 411 rotates relative to the conducting portion 413, the positioning is based on the ends of the several first reinforcing ribs 4131 closer to the first connection portion 411. For example, among the plurality of first reinforcing ribs 4131, two first reinforcing ribs 4131 located on two sides in the second direction Y have the shortest distance to the first connection portion 411, and ends of the two first reinforcing ribs 4131 located on the two sides, that are closer to the first connection portion 411, are aligned along the second direction Y.

Optionally, a distance between the end of the first reinforcing rib 4131 closer to the first connection portion 411 and the first edge line L1 is less than or equal to 0.5 mm. In this way, by limiting the maximum distance between the end of the first reinforcing rib 4131 and the first edge line L1, it is ensured that the first connection portion 411 can rotate relative to the conducting portion 413 at the connection with the conducting portion 413, so as to avoid affecting the connection effect between the first connection portion 411 and the electrode terminal 31, thereby ensuring the effect of electric energy conduction between the first connection portion 411 and the electrode terminal 31. For example, the distance between the end of the first reinforcing rib 4131 closer to the first connection portion 411 and the first edge line L1 is 0.2 mm, 0.3 mm, 0.5 mm, etc.

In some embodiments, in the case where the conducting portion 413 includes a plurality of second reinforcing ribs 4132, as shown in FIG. 2, an end of each of the plurality of second reinforcing ribs 4132 that is closer to the second connection portion 412 is aligned along the second direction Y, and a straight line where the ends of the plurality of second reinforcing ribs 4132 closer to the second connection portion 412 are located is parallel to a second edge line L2 of the conducting portion 413 that is closer to the second connection portion 412. In this way, with the ends of the plurality of second reinforcing ribs 4132 closer to the second connection portion 412, the bending position of the second connection portion 412 when rotating relative to the conducting portion 413 can be more effectively limited, so as to further improve the rotating yield of the second connection portion 412.

In addition to the ends of the plurality of second reinforcing ribs 4132 closer to the second connection portion 412 being aligned along the second direction Y, there may also be several second reinforcing ribs 4132 having a shortest distance to the second connection portion 412 among the plurality of second reinforcing ribs 4132, and an end of each of the several second reinforcing ribs 4132 that is closer to the second connection portion 412 is aligned along the second direction Y. In this case, when the second connection portion 412 rotates relative to the conducting portion 413, the positioning is based on the ends of the several second reinforcing ribs 4132 closer to the second connection portion 412. For example, among the plurality of second reinforcing ribs 4132, two second reinforcing ribs 4132 located on two sides in the second direction Y have the shortest distance to the second connection portion 412, and the ends of the two second reinforcing ribs 4132 located on the two sides, that are closer to the second connection portion 412, are aligned along the second direction Y.

Optionally, a distance between the end of the second reinforcing rib 4132 closer to the second connection portion 412 and the second edge line L2 is less than or equal to 0.5 mm. In this way, by limiting the maximum distance between the end of the second reinforcing rib 4132 and the second edge line L2, it is ensured that the second connection portion 412 can rotate relative to the conducting portion 413 at the connection with the conducting portion 413, so as to avoid affecting the connection effect between the second connection portion 412 and the second connection member 42, thereby ensuring the effect of electric energy conduction between the second connection portion 412 and the second connection member 42. For example, the distance between the end of the second reinforcing rib 4132 closer to the second connection portion 412 and the second edge line L2 is 0.2 mm, 0.3 mm, 0.5 mm, etc.

An embodiment of the present disclosures also provides an electric device, which may be an energy storage device, a vehicle, an energy storage container, etc. The electric device includes the energy storage apparatus described in the above embodiments, and the energy storage apparatus supplies power to the electric device. Thus, in combination with the energy storage apparatus described above, in the case where the yield of the battery cell 100 is high, the safety of use of the electric device can be improved, and in the case where the battery cell 100 has a high conductivity, the stability of use of the electric device can be improved.

In the embodiments of the present disclosure, the terms "first", "second", and "third" are used for descriptive purposes only and are not to be understood as indicating or implying relative importance; the term "a plurality of" refers to two or more, unless otherwise expressly defined. Terms such as "installing", "connecting", "connection", and "fixing" should be understood in a broad sense. For example, "connecting" can be a fixed connection, a detachable connection, or an integral connection; "connected" can be a direct connection or an indirect connection through an intermediate medium. For those of ordinary skill in the art, the specific meanings of the above terms in the embodiments of the present disclosure can be understood according to specific circumstances.

In the description of the embodiments of the present disclosure, it should be understood that the directions or positional relationships indicated by terms such as "up", "down", "left", "right", "front" and "back" are based on the directions or positional relationships shown in the accompanying drawings and are only for the convenience of describing the embodiments of the present disclosure and simplifying the description, rather than indicating or implying that the device or unit referred to must have a specific direction or be constructed and operated in a specific orientation, and therefore, should not be understood as a limitation on the embodiments of the present disclosure.

In the description of the specification, the description of the terms such as "an embodiment", "some embodiments", "specific embodiment", etc. means that the specific features, structures, materials or characteristics described in conjunction with the embodiment or example are included in at least one embodiment or example of the embodiments of the present disclosure. In this specification, the schematic representation of the above terms does not necessarily refer to the same embodiment or example. Moreover, the specific features, structures, materials or characteristics described can be combined in any one or more embodiments or examples in a suitable manner.

Those above are only preferred embodiments in the embodiments of the present disclosure and are not intended to limit the embodiments of the present disclosure. For those skilled in the art, the embodiments of the present disclosure may have various modifications and variations. Any modifications, equivalent replacements, improvements, etc. made within the spirit and principles of the embodiments of the present disclosure shall be included in the protection scope of the embodiments of the present disclosure.

## Claims

1. A current collecting assembly, applied to an energy storage apparatus, the current collecting assembly comprising:
a first connection member, comprising a first connection portion, a second connection portion, and a conducting portion connected between the first connection portion and the second connection portion, the first connection portion, the second connection portion, and the conducting portion being distributed along a first direction;
wherein the conducting portion is provided with at least one first reinforcing rib extending along a direction away from the first connection portion from an end closer to the first connection portion, and at least one second reinforcing rib extending along a direction away from the second connection portion from an end closer to the second connection portion, the first reinforcing rib protrudes from a first surface of the conducting portion, the first connection portion is rotatable to a first side where the first surface of the conducting portion is located, and the second reinforcing rib protrudes from a second surface of the conducting portion, and the second connection portion is rotatable to a second side where the second surface of the conducting portion is located;
wherein the first reinforcing rib and the second reinforcing rib are arranged in a staggered manner in a second direction, and the first reinforcing rib and the second reinforcing rib partially overlap in the second direction, the second direction being perpendicular to the first direction; and
a second connection member, wherein the second connection portion is mechanically connected to a surface of the second connection member, and after the second connection portion rotates to the second side of the conducting portion, the second connection member is located at a side of the second connection portion facing away from the conducting portion.

2. The current collecting assembly according to claim 1, wherein a length of an overlapping part of the first reinforcing rib and the second reinforcing rib along the first direction is greater than or equal to 0.5 mm.

3. The current collecting assembly according to claim 1, wherein an extension direction of the first reinforcing rib and an extension direction of the second reinforcing rib are both parallel to the first direction.

4. The current collecting assembly according to any one of claims 1 to 3, wherein the conducting portion has a plurality of the first reinforcing ribs and a plurality of the second reinforcing ribs; and
wherein the plurality of first reinforcing ribs and the plurality of second reinforcing ribs are arranged along the second direction, and the first reinforcing ribs and the second reinforcing ribs are alternately arranged along the second direction.

5. The current collecting assembly according to claim 4, wherein ends of the plurality of first reinforcing ribs closer to the first connection portion are aligned along the second direction, and a straight line where the ends of the plurality of first reinforcing ribs closer to the first connection portion are located is parallel to a first edge line of the conducting portion that is closer to the first connection portion.

6. The current collecting assembly according to claim 5, wherein a distance between the ends of the first reinforcing ribs closer to the first connection portion and the first edge line is less than or equal to 0.5 mm.

7. The current collecting assembly according to claim 4, wherein ends of the plurality of second reinforcing ribs closer to the second connection portion are aligned along the second direction, and a straight line where the ends of the plurality of second reinforcing ribs closer to the second connection portion are located is parallel to a second edge line of the conducting portion that is closer to the second connection portion.

8. The current collecting assembly according to claim 7, wherein a distance between the ends of the second reinforcing ribs closer to the second connection portion and the second edge line is less than or equal to 0.5 mm.

9. The current collecting assembly according to claim 1, wherein, in a thickness direction of the conducting portion, a height of the first reinforcing rib protruding from the first surface and a height of the second reinforcing rib protruding from the second surface are both greater than or equal to a thickness of the conducting portion.

10. The current collecting assembly according to claim 1, wherein the first connection member further comprises a first bending portion and a second bending portion;
the first bending portion is connected to the first connection portion and the conducting portion, and the first bending portion is bendable so that the first connection portion rotates to the first side of the conducting portion; and
the second bending portion is connected to the second connection portion and the conducting portion, and the second bending portion is bendable so that the second connection portion rotates to the second side of the conducting portion.

11. An energy storage apparatus, comprising:
a housing, comprising an accommodation cavity having an opening;
an electrode assembly, accommodated in the accommodation cavity;
an end cap assembly, sealing the opening of the housing; and
the current collecting assembly according to any one of claims 1 to 10, located between the electrode assembly and the end cap assembly, and connecting the electrode assembly and the end cap assembly.

12. An electrical device, comprising the energy storage apparatus according to claim 11, wherein the energy storage apparatus supplies power to the electrical device.
